# EUROPÄISCHE PATENTSCHRIFT

(11) **EP 4 584 862 B1**
(45) Veröffentlichungstag und Bekanntmachung des Hinweises auf die Patenterteilung: **29.04.2026**
(21) Anmeldenummer: 23764611.2
(22) Anmeldetag: 31.08.2023
(51) Int. Cl.: H02M 7/5387, H02J 3/12, H02J 3/14

(54) **VERFAHREN ZUM BETREIBEN EINES WECHSELRICHTERS**
METHOD FOR OPERATING AN INVERTER
PROCÉDÉ DE FONCTIONNEMENT D'UN ONDULEUR

(30) Priorität: 07.09.2022 DE 102022122683
(43) Veröffentlichungstag der Anmeldung: 16.07.2025
(73) Patentinhaber: SMA Solar Technology AG, 34266 Niestetal (DE)
(72) Erfinder: UNRU, Alexander, 34225 Baunatal (DE); KHSHAINY, Mohamed, 34127 Kassel (DE); KHALFET, Chokri, 34177 Kassel (DE)
(86) Internationale Anmeldenummer: PCT/EP2023/073898
(87) Internationale Veröffentlichungsnummer: WO 2024/052204

(56) Entgegenhaltungen:
- WO-A1-2022/165701

## Beschreibung

Die Erfindung betrifft ein Verfahren zum Betreiben eines Wechselrichters und ein Energiesystem.

### Problemstellung

In den letzten Jahrzehnten gab es einen Trend der Abkehr von Energieerzeugung aus fossilen Energieträgern. Vielmehr ist es bevorzugt, Energie, insbesondere elektrische Energie, aus erneuerbaren Energiequellen zu erzeugen. Elektrische Energie aus erneuerbaren Energiequellen wird von den Energiequellen in Form von Gleichstrom bereitgestellt, der zunächst durch Wechselrichter in Wechselstrom gewandelt werden muss, um vom Erzeuger selbst genutzt zu werden oder auch in ein öffentliches Energieversorgungsnetz, insbesondere ein AC-Netz, eingespeist zu werden.

Dabei können verschiedene Fehler im Energieversorgungsnetz auftreten, auf die der Wechselrichter reagieren kann. Beispielsweise kann es zu einem Kurzschlussfehler im Energieversorgungsnetz kommen, bei dem normativ vorgegeben die maximal mögliche Leistung des Wechselrichters in das Energieversorgungsnetz eingespeist werden muss. In einem anderen Fall kann das Energieversorgungsnetz ausfallen, sodass weder eine Einspeisung in das noch eine Entnahme elektrischer Leistung aus dem Energieversorgungsnetz möglich sind.

Im Stand der Technik sind Verfahren bekannt, mit denen die oben genannten Fehler erkannt werden können. Jedoch ist es gewünscht, dass das Teilnetz, in dem sowohl die Energiequellen als auch zumindest ein Wechselrichter angeordnet sind, weiter mit elektrischer Leistung versorgt werden soll. Dieser Übergang von der Versorgung eines Teilnetzes durch ein Energieversorgungsnetz zur Versorgung des Teilnetzes als Inselnetz nach einer Trennung vom Energieversorgungsnetz wird vom Stand der Technik nicht abgedeckt.

Die DE 10 2019 116 254 A1 zeigt hierzu ein Umschalten zwischen stromstellendem Betriebsmodus und spannungsstellendem Betriebsmodus eines Wechselrichters.

Ferner ist ein sogenanntes STATCOM bekannt, das ein Energieversorgungsnetz stabilisieren soll.

Das erfindungsgemäße Verfahren zum Betreiben eines Wechselrichters in einem Teilnetz, das über einen ansteuerbaren Trennschalter mit einem Energieversorgungsnetz verbunden ist, umfassend die Schritte:
- während der Trennschalter geschlossen ist, Betreiben des Wechselrichters in einem stromeinprägenden Modus,
- laufendes Überwachen des Energieversorgungsnetzes auf einen Spannungsabfall,
- in dem Fall, dass ein Spannungsabfall des Energieversorgungsnetzes erkannt wird, Wechsel des Betriebsmodus des Wechselrichters in einen spannungsstellenden Modus, wobei durch den Wechselrichter eine vorläufige Spannung gestellt wird, die gegenüber der Netznormalspannung verringert ist,
- nach Ablauf einer vorgegebenen Zeitdauer nach Erkennen des Netzausfalls, falls der Spannungsabfall des Energieversorgungsnetzes fortbesteht, Öffnen des Trennschalters und sukzessives Erhöhen der gestellten Spannung auf die Netznormalspannung, und
- nach Ablauf einer vorgegebenen Zeitdauer nach Erkennen des Netzausfalls, falls der Ausfall des Energieversorgungsnetzes nicht fortbesteht, Betreiben des Wechselrichters in dem stromeinprägenden Modus.

Das vorstehende Verfahren regelt einen Wechselrichter in einem Energienetz, auch Teilnetz genannt, das von einem Energieversorgungsnetz getrennt werden kann und insbesondere unter bestimmten Bedingungen getrennt wird. Diese Bedingungen umfassen einen Ausfall der Versorgungsfähigkeit des Energieversorgungsnetzes in dem Sinne, dass die Energieversorgung des Teilnetzes nicht durch das Energieversorgungsnetz sichergestellt werden kann oder mit anderen Worten keine elektrische Leistung mehr aus dem Energieversorgungsnetz bezogen werden kann.

Insbesondere ist es in diesem Zusammenhang erforderlich, dass ein Wechselrichter, der zunächst in einem stromeinprägenden Modus betrieben wird, bei einer Trennung vom Energieversorgungsnetz das Teilnetz aufbauen muss, d.h. die Spannung im Teilnetz in einem spannungseinprägenden Modus stellen muss.

In einem stromeinprägenden Modus synchronisiert sich ein Wechselrichter auf eine Netzspannung, entweder des Energieversorgungsnetzes oder eines Teilnetzes, und regelt den eingespeisten Strom. Folglich kann, solange ein Energieversorgungsnetz das Teilnetz mit Energie speist, also der Trennschalter zwischen Teilnetz und Energieversorgungsnetz geschlossen ist, der Wechselrichter auf das Energieversorgungsnetz synchronisiert sein und entsprechend der Frequenz, Spannung und Phase des Energieversorgungsnetzes in das Teilnetz einspeisen.

In einem spannungseinprägenden Modus ist lediglich eine unzureichende Netzspannung bzw. auch keine Netzspannung durch das Energieversorgungsnetz gegeben bzw. im Teilnetz vorhanden. Wird im erfindungsgemäßen Verfahren also festgestellt, dass während des stromeinprägenden Modus, also während der Trennschalter zum Energieversorgungsnetz geschlossen ist, ein Spannungsabfall im Teilnetz vorliegt, schaltet der Wechselrichter in den spannungseinprägenden Modus. Der Wechselrichter stellt die Spannung im Teilnetz dann selbstständig nach normativen Vorgaben hinsichtlich Höhe der Spannung und Frequenz. In Mitteleuropa beträgt dabei die Normfrequenz 50 Hz und die Normspannung beträgt 230 V. Die normativen Vorgaben können aber je nach Netzbetreiber an der Örtlichkeit variieren.

Das Feststellen des Spannungsabfalls kann dabei durch jedwedes Mittel zur Messung einer Spannung verwirklicht sein. Beispielsweise kann ein Voltmeter an eine Leitung zwischen Energieversorgungsnetz und Trennschalter angeschlossen sein. So kann eine Spannung, die das Energieversorgungsnetz direkt vor dem Trennschalter, also der Verbindungsstelle zum Teilnetz, bereitstellt, direkt gemessen werden. Alternativ kann auch ein Voltmeter am AC-Eingang des Wechselrichters angeschlossen sein. Wird nun durch das eingebaute Voltmeter ein Spannungsabfall des Energieversorgungsnetzes festgestellt, kann der Wechselrichter durch das eingebaute Voltmeter seinen Betrieb ohne Verzögerungen, beispielweise durch eine Signalübertragung eines externen Voltmeters, von einem stromeinprägenden in einen spannungseinprägenden Modus umschalten.

In einer Ausführungsform wird ein Spannungsabfall des Energieversorgungsnetzes der Spannungsabfall des Energieversorgungsnetzes dadurch erkannt, dass die Spannung des Energieversorgungsnetzes um einen Schwellwert verringert ist, wobei der Schwellwert bevorzugt 5% beträgt.

Mit anderen Worten wird dann ein Spannungsabfall erkannt, wenn eine Spannung des Energieversorgungsnetzes gegenüber der Netznormalspannung um mindestens den Schwellwert verringert, bevorzugt um 5% verringert, ist. Dabei wird die aktuelle Spannung des Energieversorgungsnetzes mit der Netznormalspannung verglichen. Die Netznormalspannung ist dabei die Spannung, die im lokalen bzw. regionalen Energieversorgungsnetz nominal festgelegt ist (in Europa 230V).

Diese Ausführungsform bietet bei der Erkennung eines Spanungsabfalls mehrere Vorteile. Es kann bereits ein geringer Spannungsabfall der Spannung im Energieversorgungsnetz erkannt werden. Hierdurch kann ein gradueller Spannungsabfall bereits frühzeitig erkannt werden, sodass eine Verzögerung bei dem Umschalten zwischen dem stromeinprägenden Modus des Wechselrichters und dem spannungseinprägenden Modus gering ist. Die Erzeugung eines Inselnetzes in dem Teilnetz sowie die Versorgung des Teilnetzes mit elektrischer Leistung durch den Wechselrichter sind verzögerungsarm. Verbraucher können folglich nahezu übergangslos mit elektrischer Leistung versorgt werden.

Sollte es sich bei dem Spannungsabfall lediglich um eine Schwankung der Spannung des Energieversorgungsnetzes handeln und das Energieversorgungsnetz nach dem Ende der Schwankung die Netznormalspannung wieder bereitstellen, wird das Verfahren beendet. Wird es allerdings nicht wiederhergestellt, wie vorstehend beschrieben, und sich die Spannung des Energieversorgungsnetzes graduell verringern, ist der Wechselrichter bereits im spannungseinprägenden Modus und kann eine Energieversorgung des Teilnetzes übernehmen.

In einer Ausführungsform kann das Regelungsverfahren so ausgestaltet sein, dass die durch den Wechselrichter gestellte Spannung frequenzgleich und in Phase zur Spannung vor Erkennen des Spannungsabfalls des Energieversorgungsnetzes gewählt ist. Diese Ausführungsform bezieht insbesondere, aber nicht ausschließlich, den Fall ein, dass ein Energieversorgungsnetz nach dem Spannungsabfall wieder normal arbeitet. Das heißt, dass der Spannungsabfall ein temporärer Effekt ist, der nachfolgend durch eine Rückkehr der Spannung des Energieversorgungsnetzes zu einem Nominalwert behoben ist. Durch diese Ausführungsform wird der Übergang zu einem Normalbetrieb erleichtert, was im Folgenden näher beschrieben ist.

Findet ein Spannungsabfall des Energieerzeugungsnetzes statt, schaltet, wie bereits vorstehend beschrieben, der Wechselrichter eines Teilnetzes von einem stromeinprägenden Modus in einen spannungseinprägenden Modus um. Die Spannung, die der Wechselrichter im spannungseinprägenden Modus in das Teilnetz einprägt, ist dabei frequenzgleich und in Phase zur Spannung vor dem Erkennen des Spannungsabfalls des Energieversorgungsnetzes. Kommt es nun zu dem Fall, dass das Energieversorgungsnetz wieder zur Verfügung steht, kommt es nicht zu einer erneuten Anpassung der Phase der Spannung beim Wechselrichter, da das Energieversorgungsnetz und das Teilnetz phasengleich sind. Eine Umstellung auf den Regelbetrieb, in dem das Energieversorgungsnetz das Teilnetz mit elektrischer Leistung versorgt, ist also zügig und problemlos möglich.

In einer Ausführungsform kann das Regelungsverfahren so ausgestaltet sein, dass die durch den Wechselrichter gestellte Spannung gegenüber der Netznormalspannung des Energieversorgungsnetzes um 10% bis 30% verringert ist.

In einer Ausführungsform kann das Regelungsverfahren so ausgestaltet sein, dass, wenn bei dem Überwachen des Teilnetzes auf einen Spannungsabfall des Energieversorgungsnetzes erkannt wird, dass der Netzausfall aus einem nicht-behebbaren Kurzschlussfehler resultiert, ein Einstellen der durch den Wechselrichter gestellten vorläufigen Spannung auf die Spannung, die im Teilnetz zuletzt vor dem Erkennen des Spannungsabfalls erfasst wurde, und ein unverzügliches Öffnen des Trennschalters erfolgt.

Diese Ausführungsform befasst sich insbesondere mit einem nicht-behebbaren Kurzschlussfehler des Energieerzeugungsnetzes. Hierbei kann es dazu gekommen sein, dass eine Leitung in der Umgebung des Teilnetzes kurzgeschlossen ist. Um einen Zusammenbruch des Energieversorgungsnetzes in der Umgebung zu vermeiden, gibt es die normative Vorgabe, dass Wechselrichter im Fall eines Kurzschlussfehlers für eine bestimmte Zeitdauer, soweit möglich und erforderlich, weiterhin Leistung in ein Energieversorgungsnetz einspeisen. Dabei erkennt der Wechselrichter einen Kurzschlussfehler im Energieversorgungsnetz dadurch, dass die Spannung des Energieversorgungsnetzes plötzlich auf einen niedrigeren Wert sinkt, wobei eine Restspannung im Energieversorgungsnetz weiterhin messbar ist. Beispielsweise sinkt die Spannung des Energieversorgungsnetzes um 50%. Sollte es sich nur um einen temporären Kurzschlussfehler handeln, kann so das Energieversorgungsnetz gestützt werden, sodass es nicht aufgrund eines nur temporären Kurzschlussfehler komplett ausfällt.

Im Fall eines nicht-behebbaren Kurzschlussfehlers ist das Energieversorgungsnetz nach der bestimmten Zeit nicht wiederhergestellt. Das heißt, dass auch ein weiteres Einspeisen von elektrischer Leistung durch einen Wechselrichter eines Teilnetzes das Energieversorgungsnetz nicht wiederherstellen könnte. Um zu vermeiden, dass auch das Teilnetz ausfällt, sieht das erfindungsgemäße Regelungsverfahren vor, dass der Wechselrichter in spannungseinprägenden Modus umschaltet und das Teilnetz unverzüglich vom Energieversorgungsnetz getrennt wird. Die Trennung vom Energieversorgungsnetz geschieht dabei beispielsweise über einen Trennschalter, der zwischen dem Energieversorgungsnetz und dem Teilnetz angeordnet ist. So kann bei einem Kurzschlussfehler im Energieversorgungsnetz zwischen einem behebbaren Kurzschlussfehler, der durch ein wiederhergestelltes Energieversorgungsnetz nicht mehr relevant ist, und einem nicht-behebbaren Kurzschlussfehler, der innerhalb einer normativ vorgegebenen Zeit nicht behoben ist, unterschieden werden und im Sinne des Teilnetzes unter Erfüllung normativer Vorgaben gehandelt werden.

Ferner kann der Wechselrichter einen Kurzschlussfehler von einem Netzausfall so unterscheiden, dass bei einem Netzausfall die messbare Spannung des Energieversorgungsnetzes auf 0V sinkt, also das Energieversorgungsnetz keine messbare Spannung hat.

In einer Ausführungsform kann das Regelungsverfahren so ausgestaltet sein, dass, wenn bei dem Überwachen des Teilnetzes auf einen Spannungsabfall des Energieversorgungsnetzes erkannt wird, dass der Spannungsabfall des Energieversorgungsnetzes aus einem Ausfall des Energieversorgungsnetzes resultiert, die durch den Wechselrichter gestellten vorläufigen Spannung auf eine Spannung, die 90% der Spannung, die zuletzt vor dem Erkennen des Ausfalls des Energieversorgungsnetzes erfasst wurde, eingestellt ist und der Trennschalter unverzüglich geöffnet wird.

Ein Aspekt der Erfindung betrifft ein Energiesystem mit zumindest einem Wechselrichter, der dazu eingerichtet ist, nach dem Verfahren eines der vorhergehenden Ansprüche geregelt zu werden, und einem Trennschalter, der das Energiesystem von einem Energieversorgungsnetz trennen kann.

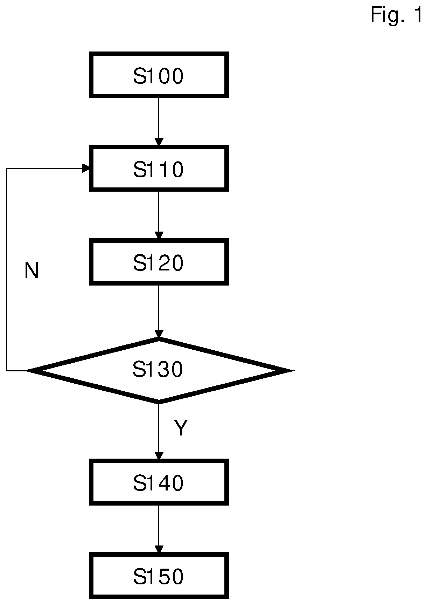

Im Folgenden wird die Erfindung mithilfe einer Figur dargestellt, wobei
- Fig. 1: ein Ablaufdiagramm des erfindungsgemäßen Regelungsverfahrens zeigt.

Im Folgenden wird die Figur detailliert erläutert.

In Fig. 1 ist ein Ablaufdiagramm des erfindungsgemäßen Regelungsverfahrens gezeigt. Das Verfahren beginnt mit dem Schritt S100. Schritt S100 bedeutet den Start des Verfahrens. Dies geschieht in den meisten Fällen mit dem Starten eines Wechselrichters, auf dem das Regelungsverfahren abläuft. Nachfolgend fährt das Verfahren mit Schritt S110 fort. In Schritt S110 wird der Wechselrichter in einem stromeinprägenden Modus betrieben. Im stromeinprägenden Modus ist der Wechselrichter auf die Spannung des Energieversorgungsnetzes synchronisiert und speist elektrische Leistung einer angeschlossenen Gleichstromquelle in ein Teilnetz ein, an das der Wechselrichter angeschlossen ist. Das Energieversorgungsnetz ist dabei über einen Trennschalter mit dem Teilnetz, an das der Wechselrichter angeschlossen ist, verbunden. Beispielsweise kann beim Trennschalter in dauerhafter Verbindung mit dem Energieversorgungsnetzes ein Voltmeter angeschlossen sein, das die Spannung des Energieversorgungsnetzes kontinuierlich misst. Das Verfahren führt nachfolgend und laufend Schritt S120 aus.

In Schritt S120 wird das Energieversorgungsnetz laufend auf Spannungsabfälle überwacht. Hierfür wird die Spannung des Energieversorgungsnetzes laufend durch eine Spannungsmessungseinrichtung, wie beispielsweise ein Voltmeter, gemessen. Wird nun in Schritt S130 ein Spannungsabfall erkannt, wechselt der Wechselrichter in einen spannungseinprägenden Modus. Die dabei eingeprägte Spannung ist gegenüber der Netznormalspannung des Energieversorgungsnetzes um 10 bis 30% der Netznormalspannung verringert.

Nachfolgend gibt es einen Fall, in dem der Spannungsabfall fortbesteht. Bei einem Fortbestand des Spannungsabfalls mit Restspannung im Energieversorgungsnetz wird nach einer normativ vorgegebenen Zeit bestimmt, dass ein nicht-behebbarer Kurzschlussfehler vorliegt. In diesem Fall wird davon ausgegangen, dass das Energieversorgungsnetz ausgefallen ist. Beim Netzausfall, also wenn keine Spannung mehr im Energieversorgungsnetz messbar ist, kann sofort beim Feststellen des Netzausfalls von einem Fortbestehen des Spannungsabfalls ausgegangen werden. Das Verfahren schreitet über die Entscheidung Y bei Schritt S130 mit Schritt S140 fort.

In Schritt S140 wird der Trennschalter zwischen dem Energieversorgungsnetz und dem Teilnetz geöffnet, d.h. die leistungsübertragende Verbindung zwischen dem Energieversorgungsnetz und dem Teilnetz wird getrennt. Die Leistung des Wechselrichters, der nun im spannungseinprägenden Modus betrieben wird, wird nun in das Teilnetz eingespeist, wobei die Verbraucher im Teilnetz durch diese eingespeiste Leistung betrieben werden. Der Wechselrichter, dessen bereitgestellte Spannung gegenüber der Netznormalspannung des Energieversorgungsnetzes verringert ist, wird nun auf die Netznormalspannung des Energieversorgungsnetzes erhöht.

In einem anderen Fall lässt der Spannungsabfall der Spannung des Energieversorgungsnetzes nach. Mit anderen Worten steigt die Spannung des Energieversorgungsnetzes vom zwischenzeitlich verringerten Wert aufgrund eines temporären Fehlers wieder auf die Netznormalspannung, sodass die Spannung des Energieversorgungsnetzes nicht mehr um einen Wert, der größer als der Schwellwert ist, verringert ist. In diesem Fall fährt das Verfahren über S130: N fort und das Verfahren fährt mit Schritt S110 fort, d.h. der Wechselrichter wird wieder im stromeinprägenden Modus betrieben. Nach dieser Umstellung des Modus des Wechselrichters schreitet der Prozess wieder zur laufenden Überwachung des Energieversorgungsnetzes in Schritt S120 fort.

### Bezugszeichenliste

- S100-S150: Schritte

## Patentansprüche

1. Regelungsverfahren zum Betrieb eines Wechselrichters in einem Energienetz, das über einen ansteuerbaren Trennschalter mit einem Energieversorgungsnetz verbunden ist, umfassend die Schritte:
- während der Trennschalter geschlossen ist, Betreiben des Wechselrichters in einem stromeinprägenden Modus (S110),
- laufendes Überwachen (S120) des Energieversorgungsnetzes auf einen Spannungsabfall,
- in dem Fall, dass ein Spannungsabfall des Energieversorgungsnetzes erkannt wird, Wechsel (S130) des Betriebsmodus des Wechselrichters in einen spannungsstellenden Modus, wobei durch den Wechselrichter eine vorläufige Spannung gestellt wird, die gegenüber der Netznormalspannung verringert ist,
- nach Ablauf einer vorgegebenen Zeitdauer nach Erkennen des Spannungsabfalls, falls der Spannungsabfall des Energieversorgungsnetzes fortbesteht (S130: Y), Öffnen (S140) des Trennschalters und Erhöhen der durch den Wechselrichter gestellten Spannung auf die Netznormalspannung, und
- nach Ablauf einer vorgegebenen Zeitdauer nach Erkennen des Spannungsabfalls, falls der Ausfall des Energieversorgungsnetzes nicht fortbesteht (S130: N), Betreiben (S110) des Wechselrichters in dem stromeinprägenden Modus.

2. Regelungsverfahren nach Anspruch 1, wobei
der Spannungsabfall des Energieversorgungsnetzes dadurch erkannt wird, dass die Spannung des Energieversorgungsnetzes um einen Schwellwert verringert ist.

3. Regelungsverfahren nach Anspruch 2, wobei
der Schwellwert zumindest 5% der Netznormalspannung beträgt.

4. Regelungsverfahren nach einem der vorhergehenden Ansprüche, wobei
die durch den Wechselrichter gestellte Spannung frequenzgleich und in Phase zur Spannung vor Erkennen des Spannungsabfalls des Energieversorgungsnetzes gewählt ist.

5. Regelungsverfahren nach Anspruch 1, 2 oder 3, wobei
die durch den Wechselrichter gestellte vorläufige Spannung gegenüber der Netznormalspannung des Energieversorgungsnetzes um 10% bis 30% verringert ist.

6. Regelungsverfahren nach einem der vorhergehenden Ansprüche, wobei, wenn bei dem Überwachen des Teilnetzes auf einen Spannungsabfall des Energieversorgungsnetzes erkannt wird, dass ein nicht-behebbaren Kurzschlussfehlervorliegt, ein Einstellen der durch den Wechselrichter gestellten vorläufigen Spannung auf die Spannung, die zuletzt vor dem Erkennen des Ausfalls des Energieversorgungsnetzes erfasst wurde, und ein unverzügliches Öffnen des Trennschalters erfolgt.

7. Regelungsverfahren nach einem der Ansprüche 1 bis 5, wobei, wenn bei dem Überwachen des Teilnetzes auf einen Spannungsabfall des Energieversorgungsnetzes erkannt wird, dass ein Ausfall des Energieversorgungsnetzes vorliegt, ein Einstellen der durch den Wechselrichter gestellten vorläufigen Spannung auf eine Spannung, die 90% der Spannung, die zuletzt vor dem Erkennen des Ausfalls des Energieversorgungsnetzes erfasst wurde, und ein unverzügliches Öffnen des Trennschalters erfolgt.

8. Energiesystem mit zumindest einem Wechselrichter, der dazu eingerichtet ist, nach dem Verfahren eines der vorhergehenden Ansprüche geregelt zu werden, und einem Trennschalter, der das Energiesystem von einem Energieversorgungsnetz trennen kann.

## Claims

1. A control method for operating an inverter in an energy grid connected to an energy supply grid via a controllable disconnecting switch, comprising the steps of:
- while the disconnecting switch is closed, operating the inverter in a current-impressing mode (S110),
- continuously monitoring (S120) the power supply grid for voltage drops,
- in the event that a voltage drop in the energy supply grid is detected, changing (S130) the inverter's operating mode to a voltage-setting mode, wherein a temporary voltage that is reduced from the grid normal voltage is set by the inverter,
- after a predetermined period of time has elapsed following detection of the voltage drop, if the voltage drop in the energy supply grid persists (S130: Y), opening (S140) of the disconnecting switch and increasing the voltage provided by the inverter to the grid normal voltage, and
- after a preset period of time has elapsed after the voltage drop has been detected, if the failure of the energy supply grid does not persist (S130: N), operating (S110) the inverter in the current-impressing mode.

2. The control method according to claim 1, wherein
the voltage drop of the energy supply grid is detected by the fact that the voltage of the energy supply grid is reduced by a threshold value.

3. The control method according to claim 2, wherein
the threshold value is at least 5% of the grid normal voltage.

4. The control method according to any of the preceding claims, wherein
the voltage provided by the inverter is selected with the same frequency and in phase with the voltage before the voltage drop of the energy supply grid is detected.

5. The control method according to claim 1, 2 or 3, wherein
the preliminary voltage provided by the inverter is reduced by 10% to 30% compared to the grid normal voltage of the energy supply grid.

6. The control method according to any of the preceding claims, wherein, when monitoring the partial grid for a voltage drop of the energy supply grid, it is detected that there is an uncorrectable short circuit error, an adjustment of the temporary voltage provided by the inverter to the voltage that was last detected before the failure of the energy supply grid was detected and an immediate opening of the disconnecting switch takes place.

7. The control method according to any of claims 1 to 5, wherein, when monitoring the partial grid for a voltage drop of the energy supply grid, it is detected that there is a failure of the energy supply grid, an adjustment of the temporary voltage provided by the inverter to a voltage that is 90% of the voltage that was last detected before the failure of the energy supply grid is detected, and an immediate opening of the disconnecting switch.

8. An energy system comprising at least one inverter adapted to be controlled according to the control method according to any of the preceding claims, and a disconnecting switch capable of disconnecting the energy system from an energy supply grid.

## Revendications

1. Procédé de régulation pour faire fonctionner un onduleur dans un réseau électrique qui est relié à un réseau d'alimentation électrique par l'intermédiaire d'un sectionneur commandable, comprenant les étapes suivantes : - pendant que le sectionneur est fermé, faire fonctionner l'onduleur dans un mode imposant le courant (S110), - surveiller en permanence (S120) le réseau d'alimentation électrique pour détecter une chute de tension, - dans le cas où une chute de tension du réseau d'alimentation électrique est détectée, changement (S130) du mode de fonctionnement de l'onduleur en un mode à commande de tension, dans lequel l'onduleur règle une tension temporaire qui est réduite par rapport à la tension normale du réseau, - après écoulement d'une durée prédéfinie après la détection de la chute de tension, si la chute de tension du réseau d'alimentation en énergie persiste (S130 : Y), ouverture (S140) du sectionneur et augmentation de la tension fournie par l'onduleur à la tension normale du réseau, et - après écoulement d'une durée prédéfinie après la détection de la chute de tension, si la panne du réseau d'alimentation électrique ne persiste pas (S130 : N), fonctionnement (S110) de l'onduleur en mode imposant le courant.

2. Procédé de régulation selon la revendication 1, dans lequel la chute de tension du réseau d'alimentation électrique est détectée par le fait que la tension du réseau d'alimentation électrique est réduite d'une valeur seuil.

3. Procédé de régulation selon la revendication 2, dans lequel la valeur seuil est d'au moins 5 % de la tension normale du réseau.

4. Procédé de régulation selon l'une des revendications précédentes, dans lequel la tension fournie par l'onduleur est choisie à la même fréquence et en phase avec la tension avant la détection de la chute de tension du réseau d'alimentation électrique.

5. Procédé de régulation selon la revendication 1, 2 ou 3, dans lequel la tension temporaire fournie par l'onduleur est réduite de 10 % à 30 % par rapport à la tension normale du réseau d'alimentation électrique.

6. Procédé de régulation selon l'une des revendications précédentes, dans lequel, si, lors de la surveillance du réseau partiel pour détecter une chute de tension du réseau d'alimentation électrique, il est détecté qu'il existe un défaut de court-circuit non éliminable, la tension temporaire fournie par l'onduleur est réglée sur la tension qui a été enregistrée en dernier avant la détection de la panne du réseau d'alimentation électrique et une ouverture immédiate du sectionneur sont effectuées.

7. Procédé de régulation selon l'une des revendications 1 à 5, dans lequel, lorsque la surveillance du sous-réseau détecte une chute de tension du réseau d'alimentation électrique et constate qu'il y a une panne du réseau d'alimentation électrique, un commande de tension temporaire fournie par l'onduleur à une tension correspondant à 90 % de la tension enregistrée en dernier lieu avant la détection de la panne du réseau d'alimentation en énergie, et une ouverture immédiate du sectionneur sont effectués.

8. Système énergétique comprenant au moins un onduleur qui est conçu pour être régulé selon le procédé de l'une des revendications précédentes, et un sectionneur qui peut séparer le système énergétique d'un réseau d'alimentation électrique.
